# EUROPEAN PATENT APPLICATION

(11) **EP 2 481 781 A2**
(43) Date of publication of application: **01.08.2012**
(21) Application number: 12152913.5
(22) Date of filing: 27.01.2012
(51) Int. Cl.: C09D 11/00, G02B 6/00

(54) **Ultraviolet curing type ink-jet for light guide plate, and light guide plate using the same**

(30) Priority: 31.01.2011 JP 2011018546
(71) Applicant: Sumitomo Chemical Company Limited, Tokyo 104-8260 (JP); Seiren Co., Ltd., Fukui-shi Fukui 918-8560 (JP)
(72) Inventor: Hyakuta, Kentarou, Ehime, 792-0015 (JP); Terasawa, Hideyuki, Fukui, 918-8560 (JP)
(74) Representative: Duckworth, Timothy John

(57) **Abstract**

An ultraviolet curing type ink-jet ink for a light guide plate comprising:
a titanium dioxide particle;
a photopolymerizable component containing a photopolymerizable monomer having a hydroxyl group; and
a photopolymerization initiator,
wherein the cumulative 50% particle size D50 of the titanium dioxide particles is 200 to 1000 nm.

## Description

### BACKGROUND OF THE INVENTION

### Field of the Invention

The present invention relates to an ultraviolet curing type ink-jet ink for a light guide plate, and the light guide plate using the same.

### Related Background Art

A transmission-type image display device such as a liquid-crystal display device generally has a surface light source device as a backlight. An edge-light type surface light source device includes a light guide plate having a transparent resin sheet, and a light source for supplying a light to the end face of the transparent resin sheet. The light which has been incident from the end face of the transparent resin sheet is reflected by reflection means such as reflective dots provided on the rear face side of the transparent resin sheet, and a planar light for image display is supplied from an exit face of the light guide plate.

A method of applying an ink-jet printing using an ink-jet ink is proposed as a method of forming reflective dots (orientation pattern) (Japanese Patent Laid-Open No. 2006-136867). The ink-jet printing is expected to be capable of easily forming the reflective dots having a configuration of a desired pattern.

### SUMMARY OF THE INVENTION

However, in the case of light supplied from the surface light source device structured by using the light guide plate having reflective dots formed thereon by the ink-jet printing, it has been found that there is a tendency that a natural color tone tends to be impaired, for example, yellowish color tone of the light is enhanced. This is considered to be because the outgoing light has been strongly affected by the reflective dots.

Then, an object of the present invention is to make the light supplied from the surface light source device have a more natural color tone, when the reflective dots of the light guide plate to be used for the surface light source device are formed with the ink-jet printing.

The present invention relates to an ultraviolet curing type ink-jet ink for a light guide plate, which includes: a titanium dioxide particle; a photopolymerizable component containing a photopolymerizable monomer having a hydroxyl group; and a photopolymerization initiator. In the ink-jet ink according to the present invention, the cumulative 50% particle size D50 of the titanium dioxide particles is 200 to 1000 nm.

By forming the reflective dots on the light guide plate by using the above described ink-jet ink according to the present invention with ink-jet printing, the light supplied from a surface light source device can be made to have a more natural color tone.

The viscosity of the ink₋jet ink at 50 ± 10°C is preferably 5.0 to 15.0 mPa.s, and more preferably of 8.0 to 12.0 mPa·s. Thereby, the ink can be stably discharged from an ink-jet head, and accordingly, the light guide plate can be manufactured with high productivity. From a similar viewpoint, the surface tension of the ink-jet ink at 25.0°C is preferably 25.0 to 45.0 mJ/m², and more preferably of 25.0 to 37.0 mJ/m².

In another aspect, the present invention relates to a method for manufacturing a light guide plate, which includes: a step of printing a pattern with the ink-jet ink according to the present invention on a surface of a transparent resin sheet by ink-jet printing; and a step of curing the ink-jet ink forming the pattern with ultraviolet rays to form reflective dots.

According to the method of the present invention, the light guide plate can be obtained, which can supply a light having a natural color tone. In addition, by the combination of the ink-jet printing with the subsequent ultraviolet curing process, the ink can be utilized with less waste and higher productivity can be obtained.

In a further another aspect, the present invention relates to a light guide plate which includes a transparent resin sheet and reflective dots provided on the transparent resin sheet. The light guide plate according to the present invention is a light guide plate which can be obtainable by the method according to the present invention.

In a further another aspect, the present invention relates to a surface light source device including the light guide plate according to the present invention, and a light source supplying a light to the end face of the light guide plate. Furthermore, the present invention relates to a transmission-type image display device which includes this surface light source device, and a transmission-type image display unit provided opposite to the exit face of the surface light source device.

According to the light guide plate and the surface light source device according to the present invention, it is possible to supply a light having a natural color tone. In addition, the transmission-type image display device according to the present invention can display an image of high quality based on the surface light source having a natural color tone while reducing a manufacturing cost when the image area of the image display device has been enlarged by adopting the ink-jet printing.

According to the present invention, the light supplied from the surface light source device can be made to have a more natural color tone, when the reflective dots of the light guide plate to be used for the surface light source device are formed with the ink-jet printing. Furthermore, according to the present invention, an effect of enhancing use efficiency of light from the light source and reducing in-plane color unevenness can also be obtained.

### BRIEF DESCRIPTION OF THE DRAWINGS

FIG. 1 is a sectional view illustrating one embodiment of a transmission-type image display device provided with a surface light source device;
FIG. 2 is a perspective view illustrating one embodiment of a method for manufacturing a light guide plate;
FIG. 3 is a schematic view illustrating a method of measuring a luminance;
FIG. 4 is a graph illustrating profiles of the luminance in a long side direction of the small back light unit;
FIG. 5 is a graph illustrating the chromaticity x in a long side direction of the small back light unit; and
FIG. 6 is a graph illustrating the chromaticity y in a long side direction of the small back light unit.

### DESCRIPTION OF THE PREFERRED EMBODIMENTS

Preferred embodiments according to the present invention will be described in detail below. However, the present invention is not limited to the following embodiment.

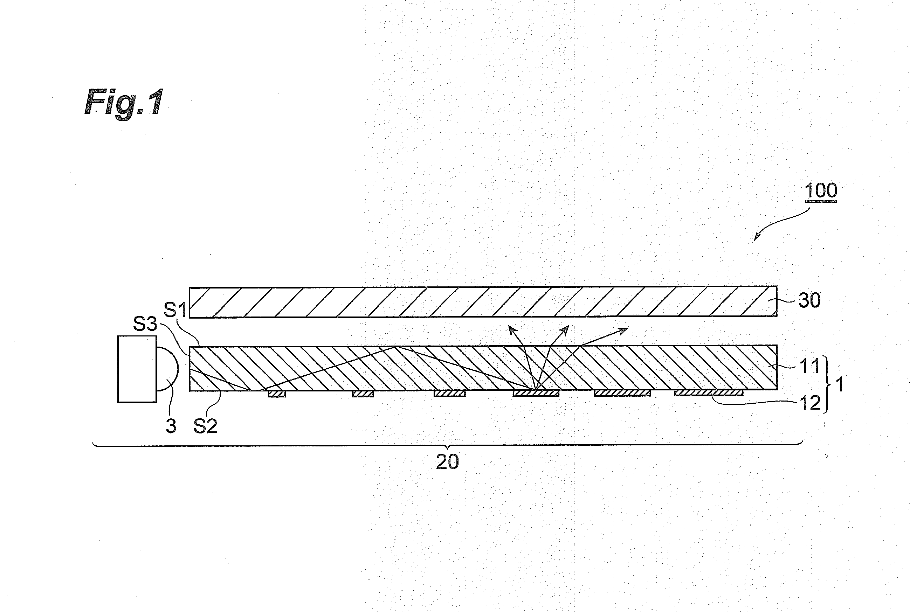

FIG. 1 is a sectional view illustrating one embodiment of a transmission-type image display device provided with a surface light source device. The transmission-type image display device 100 illustrated in FIG. 1 is mainly constituted by a surface light source device 20 and a transmission-type image display unit 30. The surface light source device 20 is an edge-light type surface light source device including a light guide plate 1 having a transparent resin sheet 11 and a light source 3 provided along an end face S3 of the transparent resin sheet 11. The transparent resin sheet 11 has an exit face S 1 and a rear face S2 in the opposite side of the exit face, and the light guide plate 1 further has reflective dots 12 provided on the rear face S2 side. The transmission-type image display unit 30 is arranged so as to oppose to the light guide plate 1 in the exit face S side of the light guide plate 1. The transmission-type image display unit 30 is, for instance, a liquid-crystal display unit having a liquid-crystal cell.

A light emitted from the light source 3 enters into the transparent resin sheet 11 from an end face S3. The light which has been entered into the transparent resin sheet 11 is irregularly reflected on the reflective dots 12 and exits mainly from the exit face S1. The light which has exited from the exit face S 1 is supplied to the transmission-type image display unit 30. The pattern of the reflective dots 12 is arranged so that a uniform planar light can efficiently exit from the exit face S1. The adjacent reflective dots 12 may be separated from each other or also may be connected with each other.

The transparent resin sheet 11 is preferably a poly (meth)alkyl acrylate resin sheet, a polystyrene sheet or a polycarbonate-based resin sheet, and among them, a polymethyl methacrylate resin sheet (PMMA resin sheet) is preferable. The transparent resin sheet 11 may also contain diffusing particles. The surface (exit face S1) in the opposite side of a surface (rear face S2) of the transparent resin sheet 11, on which the reflective dots 12 are formed, may be a flat surface as described in the present embodiment, but may also have a shape of concavity and convexity. The transparent resin sheet 11 preferably has a thickness of 1.0 mm or more and 4.5 mm or less.

The reflective dots 12 preferably has the maximum thickness of 20 µm or less, and more preferably of 15 µm or less. The yellow index is preferably 10 or less, which is evaluated on the basis of the spectral transmittance measurement of a light which has transmitted through the reflective dot 12 and the transparent resin sheet 11 in a perpendicular line direction of the exit face S1. The above described yellow index can be measured by printing an ink-jet ink used for forming the reflective dots on the whole one side of the transparent resin sheet, curing the printed ink to prepare a sample for measurement, which has a reflective film having the same thickness as that of the reflective dots, and using the sample for measurement. The yellow index of 10 or less can be easily achieved, for instance, by the combination of the PMMA resin sheet with an ink-jet ink which will be described later. The details of the method for measuring the yellow index will be described in Examples which will be described later.

The light source 3 may be a linear light source such as a cold cathode fluorescent lamp (CCFL), but is preferably a point light source such as an LED. In this case, a plurality of point light sources are arrayed along at least one side out of four sides which constitute a rectangular main face of the transparent resin sheet 11. In order to obtain a light having a natural color tone, it is particularly advantageous to combine the reflective dots to be formed by the ink-jet ink, which will be described later, with the LED.

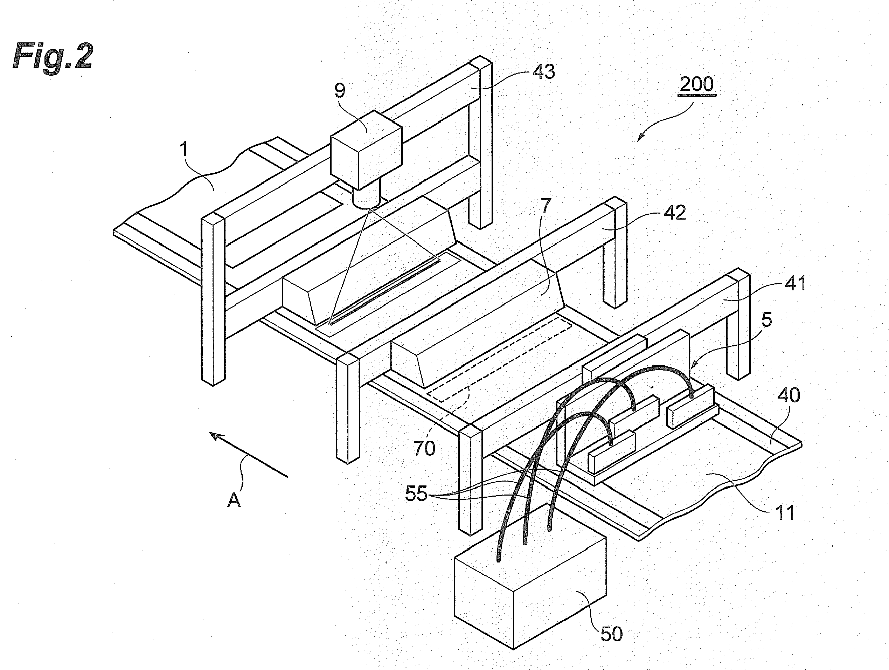

FIG. 2 is a perspective view illustrating one embodiment of a method for manufacturing a light guide plate. An device 200 illustrated in FIG. 2 for manufacturing the light guide plate is structured by transporting means 40 for transporting the transparent resin sheet 11, an ink-jet head 5, a UV lamp 7 and an inspection device 9. The ink-jet head 5, the UV lamp 7 and the inspection device 9 are arranged sequentially in this order from the upstream side in a moving direction A of the transparent resin sheet.

The transparent resin sheet 11 is continuously or intermittently transported along the direction A by the transporting means 40. The transparent resin sheet 11 may also be previously cut so as to match the size of the light guide plate to be manufactured, or may also be cut after the reflective dots 12 have been formed on the long transparent resin sheet 11. The transporting means 40 in the present embodiment is a table shuttle, but is not limited to it, and may also be, for instance, a belt conveyor, a roller or an air levitation transfer.

A droplet ink-jet ink is deposited on the surface of the transparent resin sheet 11 by the ink-jet head 5 supported by a support unit 41, so as to form a pattern comprised of the dot-shaped ink. At this time, the plurality of the dots which have been formed from the printed ink may be separated from each other or may also be connected with each other. The ink-jet head 5 has a plurality of nozzles arrayed and fixed in one row or more rows in the whole width direction (direction perpendicular to A) of a region in which the reflective dots are formed on the surface of the transparent resin sheet 11, so as to oppose to the rear face S2 of the transparent resin sheet 11. The ink in the droplet state, which has been discharged from the plurality of the nozzles by an ink-jet system, is simultaneously and collectively printed in the whole width direction of the transparent resin sheet 11. The ink is printed preferably while the transparent resin sheet 11 is continuously moved at a fixed speed. Alternatively, the ink can also be efficiently printed so as to have a pattern composed of a plurality of rows of dots, by repeating an operation of printing the ink in a state in which the transparent resin sheet 11 is stopped, moving the transparent resin sheet 11 to a next printing position, and stopping the movement. The moving speed of the transparent resin sheet 11 is controlled so that the ink may be printed appropriately. In the case of the present embodiment, the ink-jet head 5 is constituted by a plurality of units having the plurality of the nozzles, respectively. The plurality of the units are arranged so that the end parts thereof overlap each other in a direction A of transporting the transparent resin sheet 11. Occasionally, the ink-jet head may also be used which has a plurality of nozzles that are arranged in series, in the whole width direction of the region in which the reflective dots are formed on the surface of the transparent resin sheet.

In the case of the present embodiment, the ink can be collectively printed in the whole width direction of the transparent resin sheet 11, in a state in which the plurality of the nozzles of the ink-jet head 5 are fixed. Thereby, the productivity for the light guide plate is significantly enhanced compared to the case in which the ink is subsequently printed while a movable nozzle is moved along the width direction of the transparent resin sheet 11. When a large-sized light guide plate having the transparent resin sheet with the length of 200 mm or longer and 1000 mm or shorter in a short side is manufactured, in particular, an effect of enhancing the productivity according to the method of the present embodiment is large. Furthermore, according to the ink-jet method, even the fine reflective dots having, for instance, the largest diameter of 100 µm or less can be easily and accurately formed. When the transparent resin sheet is thin, the reflective dots can be seen through from the exit face S 1 side, but the phenomenon can be prevented by making the reflective dots small. A large reflective dot also can be formed if the inks supplied from the plurality of the nozzles are connected with each other.

The nozzle of the ink-jet head 5 is connected to an ink supply unit 50 through a duct 55. The ink supply unit 50 has, for instance, an ink tank in which an ink has been accommodated and a pump for sending the ink out. The plurality of the ducts 55 may be connected to a single ink tank, or may also be connected to a plurality of ink tanks, respectively.

The ink-jet ink which is used in ink-jet printing to form the reflective dots 12 is an ultraviolet curing type ink which includes a pigment, a photopolymerizable component and a photopolymerization initiator.

The pigment is preferably a titanium dioxide particle. The titanium dioxide particle preferably has a cumulative 50% particle size D50 of 200 to 1000 nm, more preferably 250 to 800 nm, and further preferably 300 to 600 nm. The titanium dioxide particle having the cumulative 50% particle size D50 in a range of 200 to 1000 nm can be obtained by appropriately selecting a product on the basis of a particle size distribution from commercialized products. The content ratio of the pigment in the ink is usually approximately 0.5 to 15.0 mass% with reference to the total mass of the ink.

The photopolymerizable component is comprised of a photopolymerizable monomer and/or a photopolymerizable oligomer, which have a photopolymerizable functional group such as a vinyl group. The photopolymerizable component preferably includes a polyester acrylate and a photopolymerizable monomer having a hydroxyl group, when the improvement of a color tone is considered to be important.

The photopolymerizable monomer having a hydroxyl group preferably has the hydroxyl group and one or more vinyl groups. For instance, the photopolymerizable monomer having the hydroxyl group includes at least one compound selected from 2-hydroxy-3-phenoxypropylacrylate and 2-hydroxyethyl acrylate. A content ratio of the photopolymerizable monomer having the hydroxyl group in the ink is preferably 40 mass% or lower with reference to the total mass of the ink. When a content ratio of the photopolymerizable monomer having the hydroxyl group exceeds 40 mass%, there is a tendency that an improvement effect of a color tone becomes small.

Polyester (meth)acrylate contained in the ink is a photopolymerizable oligomer which has a polyester chain formed by the reaction of a diol compound with a dicarboxyl compound, and has an acrylate group or a methacrylate group introduced by (meth)acrylic acid and the like. The content ratio of the polyester (meth)acrylate in the ink is preferably 2.0 to 8.0 mass% with reference to the total mass of the ink. When the content ratio of the polyester (meth)acrylate is within this range, the viscosity of the ink can be easily adjusted to such a range that the ink is stably discharged from an ink-jet nozzle.

The photopolymerization initiator can be appropriately selected from among photopolymerization initiators which are usually used in the field of an ultraviolet curing type resin. The content ratio of the photopolymerization initiator in the ink is usually approximately 0.5 to 10.0 mass% with reference to the total mass of the ink.

The ink-jet ink may also include a component other than the pigment, the photopolymerizable component and the photopolymerization initiator in such a range as not to deviate from the spirit of the present invention.

A viscosity of the ink-jet ink at 50 ± 10°C is preferably 5.0 to 15.0 mPa·s, and more preferably 8.0 to 12.0 mPa·s. The viscosity of the ink-jet ink can be adjusted, for instance, by a weight average molecular weight and/or a content ratio of the polyester (meth)acrylate. When the weight average molecular weight and the content ratio of the polyester (meth)acrylate increase, the viscosity of the ink tends to increase.

A surface tension of the ink-jet ink at 25.0°C is preferably 25.0 to 45.0 mJ/m² and more preferably of 25.0 to 37.0 mJ/m². The surface tension of the ink-jet ink can be adjusted, for instance, by blending a silicon-based surface active agent and a fluorine-based surface active agent into the ink.

The printed ink is cured in a region 70 by a UV lamp 7 which is supported by a support unit 42. Thereby, the reflective dots 12 constructed by the cured ink is formed.

After that, the light guide plate 1 is obtained through the step in which an inspection device 9 supported by a support unit 43 inspects the state of the formed reflective dots 12. The light guide plate 1 is cut off into a desired size, as needed. The light guide plate does not necessarily need to be continuously inspected by the inspection device provided in the downstream side of the ink-jet head, as in the present embodiment, but the light guide plate can be also inspected off-line by an inspection device which has been separately prepared. Alternatively, the inspection step of the light guide plate by the inspection device can be occasionally omitted.

### Examples

The present invention will be more specifically described below with reference to Examples. However, the present invention is not limited to these Examples.

### Example 1

A mixture was prepared that contained: 8.0 mass% of titanium dioxide particles (CR-95 produced by ISHIHARA SANGYO KAISHA, LTD., rutile type, TiO₂ rate of 97% ), which works as a pigment and have been surface-treated with Al, Si and an organic substance; 5.0 mass% of polyester acrylate (ARONIX M-7300K produced by Toagosei Co., Ltd.) as a photopolymerizable oligomer; 20.0 mass% of 2-hydroxy-3-phenoxypropyl acrylate (M5700 produced by Toagosei Co., Ltd.) and 20.0 mass% of 2-hydroxyethyl acrylate (LIGHT ACRYLATE HOA produced by Kyoeisha Chemical Co., Ltd.), which were photopolymerizable monomers having a hydroxyl group; 40.0 mass% of isobomyl acrylate (LIGHT ACRYLATE IBXA produced by Kyoeisha Chemical Co., Ltd.) as another photopolymerizable monomer; 3.0 mass% of hydroxyl hexyl phenylethyl ketone (IRGACURE 184 produced by BASF Japan Ltd.), 2.0 mass% of phenylbis (2,4,6-trimethyl benzoyl) phosphine oxide (IRGACURE 819 produced by BASF Japan Ltd.) and 0.1 mass% of 4,4'-[1,10-dioxo-1,10-decanediyl] bis(oxy)bis[2,2,6,6 - tetramethyl]-1piperidinyloxy (Irgastab UV 10 produced by BASF Japan Ltd.) as photopolymerization initiators; and 1.9 mass% of an organic polymer (SOLSPERSE 36000 produced by The Lubrizol Corporation) as a pigment dispersing agent: and then was treated with a bead mill dispersing device so that the pigment was dispersed. An ultraviolet curing type ink-jet ink was obtained by removing impurities from the mixture in which the pigment has been dispersed, through filtration.

A cumulative 50% particle size D50 (volume average particle size) of the titanium dioxide particles used as the pigment was measured with a dynamic light scattering method (photon correlation method) using Malvern Zetasizer Nano S produced by Spectris Co., Ltd. A dispersion liquid for measurement was prepared by diluting approximately 1g of ink into 100 times with cyclohexanone. The dispersion liquid was irradiated with an ultrasonic wave for 10 minutes by using an ultrasonic washing machine or a homogenizer. Subsequently, the dispersion liquid was charged into a sample-charging port of Zetasizer Nano S and the particle size and volume of the pigment were measured. The D50 is a particle size of particles at the point at which an integrated volume reached 50% with respect to the total volume of all the particles, when the particle size and volume of all the particles were measured and the volume was sequentially integrated from particles having a smaller particle size. The D50 of the pigment was 350 nm.

The viscosity of the ink at 40°C was 9.9 mPa·s, and the surface tension of the ink at 25°C was 37.0 mJ/m².

The obtained ink was applied onto the whole surface of one side of a PMMA resin sheet with 50 mm squares and a thickness of 4 mm by using a bar coater, the applied ink was cured by irradiation with ultraviolet rays, and a piece of a sample for measuring spectral transmittance was obtained, which had a reflective film formed from the ink thereon. As a result of having measured the thickness of the reflective film of the obtained sample by using Decktack (Large Sample Profier FP10 produced by Toho Technology Corporation), the thickness was 3.9 µm. The conditions of irradiation with ultraviolet rays are described below.

### UV irradiation conditions

Lamp: two metal halide lamps (concentrating type)
Output: 120 W/cm
Irradiation period of time: 0.5 second
Irradiation distance: focal distance + 10 mm

### Comparative Example 1

An ultraviolet curing type ink-jet ink was obtained in a similar way to that in Example 1, except that the pigment was changed to titanium dioxide particles (TIPAQUE PF-671 produced by ISHIHARA SANGYO KAISHA, LED., rutile type, TiO₂ rate of 97%). D50 of the used pigment was 170 nm.

The viscosity of the ink at 40°C was 9.6 mPa·s, and the surface tension of the ink at 25°C was 28.0 mJ/m².

A piece of a sample for measuring spectral transmittance, which had a reflective film formed from the ink thereon, was produced by using the obtained ink with a similar operation to that in Example 1. The thickness of the reflective film was 0.9 µm.

### Yellow index (YI) measurement

The spectral transmittance of light which passed through a piece of samples for measuring spectral transmittance, which had been prepared in Example 1 and Comparative Example 1, was measured in a range of a wavelength of 300 nm to 800 nm by using a spectral transmittance meter provided with an integrating sphere (U-4100 produced by Hitachi, Ltd.). From the measurement result, the yellow index (YI) was determined.

### Production of light guide plate

A masking film was peeled from a PMMA resin sheet having a size of 920 mm x 540 mm. The ink of Example 1 or Comparative Example 1 was pattern-printed on an exposed face by ink-jet printing. The printed ink was cured by irradiation with ultraviolet rays to form reflective dots, and a light guide plate was obtained, which had the reflective dots formed of a dot pattern thereon. The coverage factor of the reflective dots was 50 area%. Printing conditions and conditions of irradiation with ultraviolet rays are described below.

### Printing conditions

Nozzle diameter: 30 µm
Applied voltage: 20 V
Pulse width: 40 µs
Drive frequency: 2500 Hz
Resolution: 150 dpi
Heating temperature: 40°C

### UV irradiation conditions

Lamp: two metal halide lamps (concentrating type)
Output: 120 W/cm
Irradiation period of time: 0.5 second
Irradiation distance: focal distance + 10 mm

### Measurement of luminance

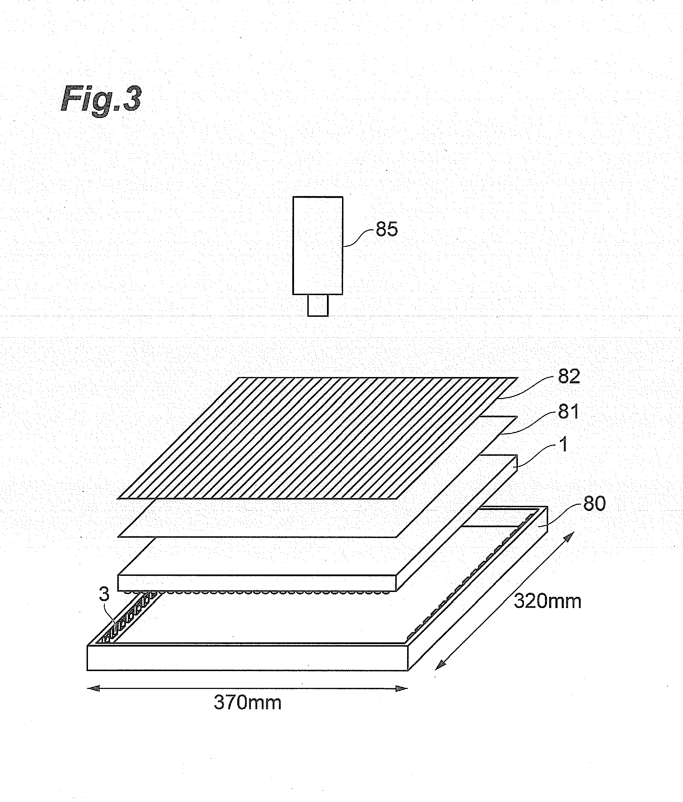

FIG. 3 is a schematic view illustrating a method of measuring a luminance. The light guide plate 1 which had been prepared in the above described paragraph "production of light guide plate" was incorporated in a small back light unit 80 having an LED bar module that had a plurality of LEDs 3 and was provided along the inner wall of a short side of a frame, in such a direction that the face having the reflective dots formed thereon was located in the bottom face side of the small back light unit. A reflective film was provided on the bottom face of the small back light unit. Furthermore, a diffusion film 81 and a prism film 82 were sequentially stacked on the light guide plate 1, and were fixed. The prism film 82 was arranged in such a direction that an extending direction of the groove was parallel to the LED bar module. The LED 3 was turned on in the above state, and a luminance, a chromaticity x and a chromaticity were measured by using a luminance meter 85 (multipoint luminance meter Eye Scale 3W produced by I. System Corporation), which was provided so as to face the prism film 82.

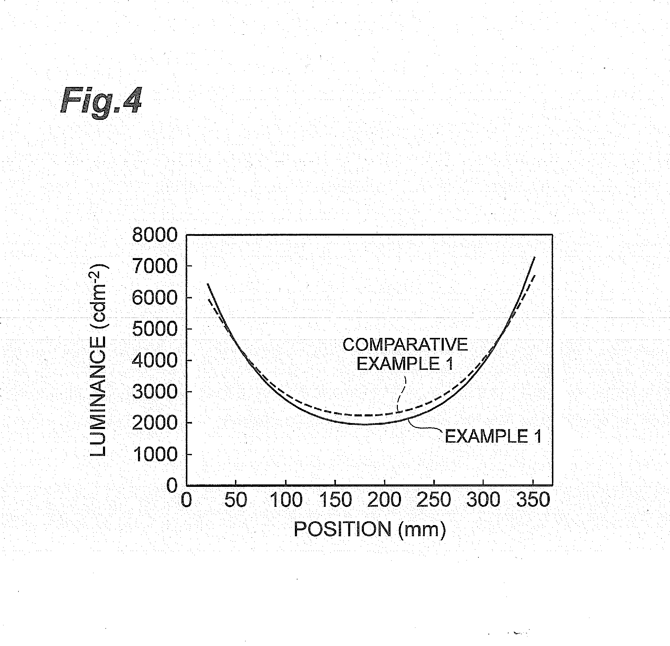

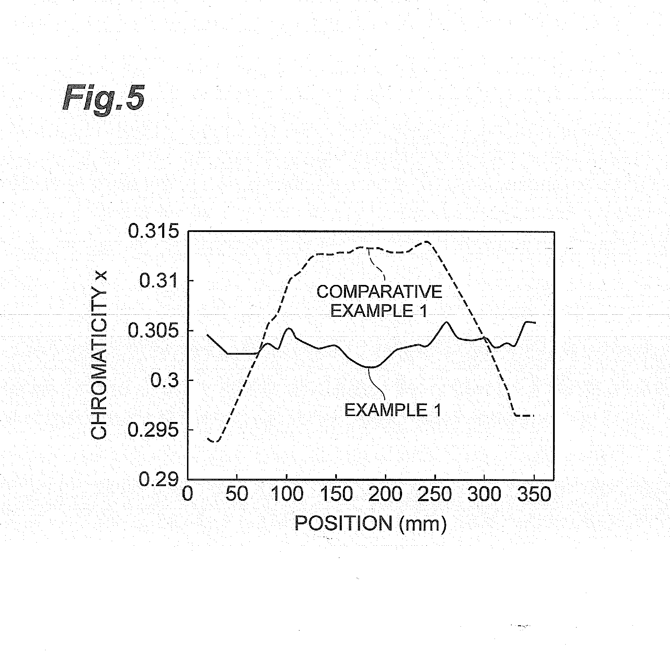

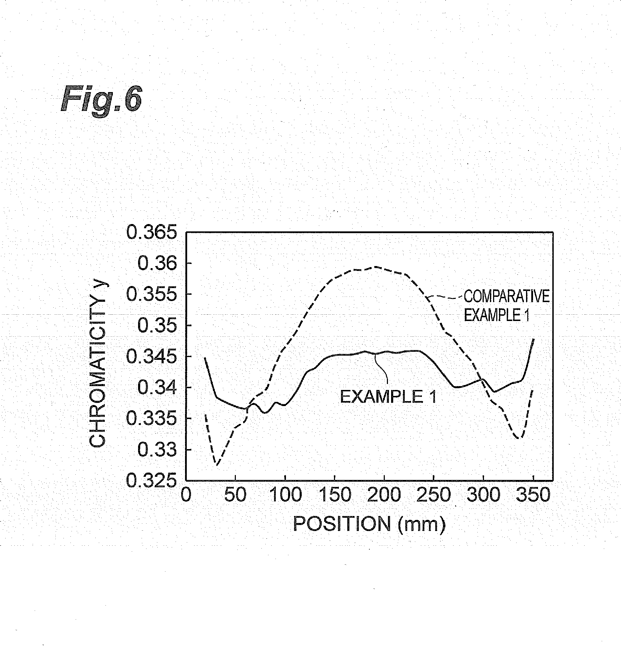

FIG. 4, FIG. 5 and FIG. 6 are graphs illustrating profiles of the luminance, the chromaticity x and the chromaticity y in a long side direction of the small back light unit, respectively. Table 1 shows the in-plane minimum luminance, the in-plane average chromaticity and the in-plane chromaticity difference, which were determined from the profiles. This result means that the smaller the in-plane minimum luminance is, the more efficiently the light emitted from an LED light source has been taken out from an exit face. The in-plane chromaticity difference is a difference between the maximum value and the minimum value of the chromaticity in the plane. The fact that this value is high means that the color unevenness is large in a screen.

**[Table 1]**

| | | Example 1 | Comparative Example 1 |
|---|---|---|---|
| Pigment (titanium dioxide particle) D50 (nm) | | 350 | 170 |
| Reactive oligomer | Polyester acrylate | 5.0 | 5.0 |
| Reactive | 2-hydroxy-3-phenoxypropylacrylate | 20.0 | 20.0 |
| monomer | 2-hydroxyethyl acrylate | 20.0 | 20.0 |
| | Isobornyl acrylate | 40.0 | 40.0 |
| Yellow index YI | | 7.3 | 7.6 |
| Measurement of luminance | In-plane minimum luminance (cd/m²) | 1746 | 2016 |
| | In-plane average chromaticity x | 0.304 | 0.308 |
| | In-plane chromaticity difference x | 0.009 | 0.026 |
| | In-plane average chromaticity y | 0.342 | 0.348 |
| | In-plane chromaticity difference y | 0.016 | 0.036 |

As is shown in Table 1, the yellow index was remarkably lowered and also the in-plane average chromaticity was obviously decreased in Example 1 that uses the ink in which the D50 of the pigment was in a range of 200 to 1000 nm, in comparison with Comparative Example 1 of which the D50 of the pigment was less than 200. Specifically, it was confirmed that the light supplied from a surface light source device could be made to show a more natural color tone, according to the present invention.

Furthermore, the light emitted from the LED light source can be more efficiently used according to Example 1, because the in-plane minimum luminance in Example 1 is smaller than that in Comparative Example 1. In addition, it was confirmed that an effect of inhibiting the color unevenness could also be obtained according to the present invention, because the in-plane chromaticity difference in Example 1 was also smaller than that in Comparative Example 1.

## Claims

1. An ultraviolet curing type ink-jet ink for a light guide plate comprising:
titanium dioxide particles;
a photopolymerizable component containing a photopolymerizable monomer having a hydroxyl group; and
a photopolymerization initiator,
wherein the cumulative 50% particle size D50 of the titanium dioxide particles is 200 to 1000 nm.

2. The ultraviolet type ink-jet ink according to claim 1, wherein the viscosity of the ink-jet ink at 50 ± 10°C is 5.0 to 15.0 mPa·s.

3. The ultraviolet type ink-jet ink according to claim 1 or 2, wherein the surface tension of the ink-jet ink at 25.0°C is 25.0 to 45.0 mJ/m².

4. A method for manufacturing a light guide plate comprising:
a step of printing a pattern with the ink-jet ink according to any one of claims 1 to 3 on a surface of a transparent resin sheet by ink-jet printing; and
a step of curing the ink-jet ink forming the pattern with ultraviolet rays to form reflective dots.

5. A light guide plate comprising a transparent resin sheet and reflective dots provided on the transparent resin sheet, and being obtainable by the method according to claim 4.

6. The light guide plate according to claim 5, wherein the maximum thickness of the reflective dots is 20 µm or less, and a yellow index evaluated on the basis of the spectral transmittance measurement of a light that transmits through the reflective dot and the transparent resin sheet is 10 or less.

7. The light guide plate according to claim 5 or 6, wherein the transparent resin sheet is a polymethyl methacrylate resin sheet.

8. A surface light source device comprising:
the light guide plate according to any one of claims 5 to 7; and
a light source for supplying light to the end face of the light guide plate.

9. A transmission-type image display device comprising:
the surface light source device according to claim 8; and
a transrrission-type image display unit provided opposite to the exit face of the surface light source device.
